# EUROPEAN PATENT SPECIFICATION

(11) **EP 3 330 208 B1**
(45) Date of publication and mention of the grant of the patent: **11.09.2019**
(21) Application number: 17200332.9
(22) Date of filing: 07.11.2017
(51) Int. Cl.: B66B 7/06, D07B 1/22

(54) **LOAD BEARING MEMBER FOR AN ELEVATOR SYSTEM HAVING A METALIZED POLYMER COATING**
LASTTRAGENDES ELEMENT FÜR EIN AUFZUGSSYSTEM MIT METALLISIERTER POLYMERBESCHICHTUNG
ÉLÉMENT PORTEUR POUR UN SYSTÈME D'ASCENSEUR PRÉSENTANT UN REVÊTEMENT POLYMÈRE MÉTALLISÉ

(30) Priority: 07.11.2016 US 201615345039
(43) Date of publication of application: 06.06.2018
(73) Proprietor: Otis Elevator Company, Farmington, Connecticut 06032 (US)
(72) Inventor: ZAFIRIS, Georgios S., Glastonbury, CT Connecticut 06033 (US); PAPAS, Paul, West Hartford, CT Connecticut 06117 (US); MOSHER, Daniel A., Glastonbury, CT Connecticut 06033 (US); DING, Zhongfen, South Windsor, CT Connecticut 06074 (US); GUILANI, Brad, Woodstock Valley, CT Connecticut 06282 (US); EASTMAN, Scott A., Glastonbury, CT Connecticut 06033 (US)
(74) Representative: Dehns

(56) References cited:
- WO-A1-2017/172886
- WO-A1-2017/172891
- US-A1- 2010 133 046
- US-A1- 2015 191 331
- US-A1- 2015 259 176

## Description

### TECHNICAL FIELD OF THE EMBODIMENTS

Embodiments disclosed herein relate to elevator systems, and more particularly, to coating of a load bearing member having a metalized polymer coating for use in an elevator system.

### BACKGROUND OF THE EMBODIMENTS

Elevator systems are useful for carrying passengers, cargo, or both, between various levels in a building. Some elevators are traction based and utilize load bearing members such as ropes or belts for supporting the elevator car and achieving the desired movement and positioning of the elevator car.

Where ropes are used as load bearing members, each individual rope is not only a traction device for transmitting the pulling forces but also participates directly in the transmission of the traction forces. Where belts are used as a load bearing member, a plurality of tension elements are embedded in a common elastomer belt body. The tension elements are exclusively responsible for transmitting the pulling forces, while the elastomer material transmits the traction forces. In some belts, the tension members are cords formed from a plurality of elements such as steel wires, while in other belts the tension members may be formed from unidirectional fibers arranged in a rigid matrix composite, providing significant benefits when used in elevator systems, particularly high rise systems. Fire resistance is an important safety element associated with belt performance.

Document US 2010/0133046 A1 discloses a belt for an elevator system according to the preamble of claim 1.

### SUMMARY OF THE EMBODIMENTS

In one aspect, a belt for an elevator system (e.g. an elevator system as herein described) is provided. The belt includes a plurality of tension members arranged along a belt width. A jacket material at least partially encapsulates the plurality of tension members. The jacket material includes a traction surface and a back surface opposite the traction surface together defining a belt thickness therebetween. The jacket material also includes two end surfaces extending between the traction surface and the back surface and defining the belt width therebetween. A metalized polymer coating layer is disposed over at least one of the two end surfaces. The jacket material comprises a groove and the metalized polymer coating layer comprises a tongue interlocked within the groove.

In an aspect of the above, the metalized polymer coating layer is further disposed over at least a portion of at least one of the traction surface or the back surface.

In an aspect of any of the above, the metalized polymer coating layer includes, without limitation, at least one of polyurethane, nitrile rubber, polybutadiene rubber, styrene-butadiene rubber, ethylene propylene rubber, ethylene propylene diene rubber, fluorosilicone rubber, silicone rubber, fluoroelastomer, polyethylene terephthalate, polyester, polyolefin, chloroprene, polyvinyl chloride, or other polymer, or thermoplastic elastomer, or thermosetting elastomer, or a ductile metal.

In an aspect of any of the above, the metalized polymer coating layer comprises at least one of polyurethane, nitrile rubber, polybutadiene rubber, styrene-butadiene rubber, ethylene propylene rubber, ethylene propylene diene rubber, fluorosilicone rubber, silicone rubber, fluoroelastomer, polyethylene terephthalate, polyester, polyolefin, chloroprene, polyvinyl chloride, or other polymer, or thermoplastic elastomer, or thermoset elastomer.

In an aspect of any of the above, the metalized polymer coating layer includes a ductile metal.

In an aspect of any of the above, the metalized polymer coating layer is applied to the jacket material through melt adhesion.

In an aspect of any of the above, the metalized polymer coating layer is applied to the jacket material through extrusion.

In one aspect, an elevator system is provided having an elevator car and a counterweight. A belt couples the elevator car to the counterweight. The belt includes a plurality of tension members arranged along a belt width. A jacket material at least partially encapsulates the plurality of tension members. The jacket material includes a traction surface and a back surface opposite the traction surface together defining a belt thickness therebetween. The jacket material also includes two end surfaces extending between the traction surface and the back surface and defining the belt width therebetween. A metalized polymer coating layer is disposed over at least one of the two end surfaces. The jacket material comprises a groove and the metalized polymer coating layer comprises a tongue interlocked within the groove.

In an aspect of the above, the metalized polymer coating layer is further disposed over at least a portion of at least one of the traction surface or the back surface.

In an aspect of any of the above, the metalized polymer coating layer includes, without limitation, at least one of polyurethane, nitrile rubber, polybutadiene rubber, styrene-butadiene rubber, ethylene propylene rubber, ethylene propylene diene rubber, fluorosilicone rubber, silicone rubber, fluoroelastomer, polyethylene terephthalate, polyester, polyolefin, chloroprene, polyvinyl chloride, or other polymer, or thermoplastic elastomer, or thermosetting elastomer, or a ductile metal.

In an aspect of any of the above, the metalized polymer coating layer comprises at least one of polyurethane, nitrile rubber, polybutadiene rubber, styrene-butadiene rubber, ethylene propylene rubber, ethylene propylene diene rubber, fluorosilicone rubber, silicone rubber, fluoroelastomer, polyethylene terephthalate, polyester, polyolefin, chloroprene, polyvinyl chloride, or other polymer, or thermoplastic elastomer, or thermoset elastomer.

In an aspect of any of the above, the metalized polymer coating layer includes a ductile metal.

In an aspect of any of the above, the metalized polymer coating layer is applied to the jacket material through melt adhesion.

In an aspect of any of the above, the metalized polymer coating layer is applied to the jacket material through extrusion.

In one aspect, a method of forming a belt (e.g. as herein described) for an elevator system (e.g. such as the systems described herein) is provided. The method includes extending a plurality of tension members along a belt width. The method also includes at least partially encapsulating the plurality of tension members with a jacket material having a traction surface and a back surface opposite the traction surface together defining a belt thickness therebetween. The jacket material also has two end surfaces extending between the traction surface and the back surface and defining the belt width therebetween. The method also includes disposing a metalized polymer coating layer over at least one of the two end surfaces. The method further comprises forming a groove in the jacket material, forming a tongue in the metalized polymer coating layer and interlocking the tongue within the groove.

In an aspect of the above, the metalized polymer coating layer is disposed over at least a portion of at least one of the traction surface or the back surface.

In an aspect of any of the above, the method also includes forming the metalized polymer coating layer from, without limitation, at least one of polyurethane, nitrile rubber, polybutadiene rubber, styrene-butadiene rubber, ethylene propylene rubber, ethylene propylene diene rubber, fluorosilicone rubber, silicone rubber, fluoroelastomer, polyethylene terephthalate, polyester, polyolefin, chloroprene, polyvinyl chloride, or other polymer, or thermoplastic elastomer, or thermosetting elastomer, or a ductile metal.

In an aspect of any of the above, the method also includes applying the metalized polymer coating layer to the jacket material through melt adhesion.

In an aspect of any of the above, the method also includes applying the metalized polymer coating layer to the jacket material through extrusion.

### BRIEF DESCRIPTION OF THE DRAWINGS

FIG. 1 is a perspective view of an example of a traction elevator system;
FIG. 2 is a cross-sectional view of an exemplary belt for an elevator system;
FIG. 3 is a cross-sectional view of an exemplary tension member for a belt;
FIG. 4 is a cross-sectional view of an exemplary embodiment of a belt for an elevator system, which is not part of the claimed invention.
FIG. 5 is a cross-sectional view of an exemplary embodiment of a belt for an elevator system, which is not part of the claimed invention; and
FIG. 6 is a cross-sectional view of an exemplary embodiment of a belt for an elevator system according to the invention.

### DETAILED DESCRIPTION OF THE DRAWINGS

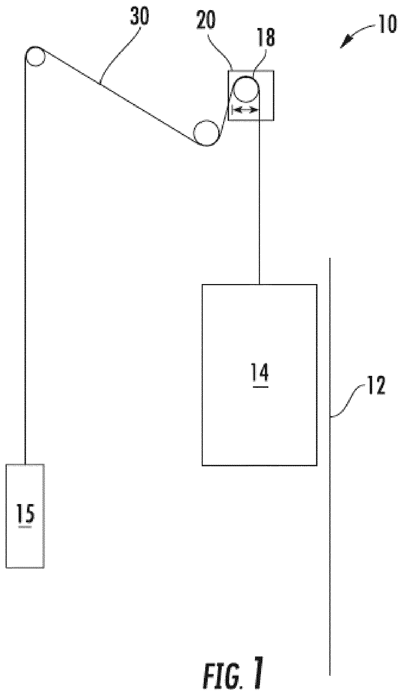

Referring now to FIG. 1, an exemplary embodiment of an elevator system 10 is illustrated. The elevator system 10 includes an elevator car 14 configured to move vertically upwardly and downwardly within a hoistway 12 along a plurality of car guide rails (not shown). Guide assemblies mounted to the top and bottom of the elevator car 14 are configured to engage the car guide rails to maintain proper alignment of the elevator car 14 as it moves within the hoistway 12.

The elevator system 10 also includes a counterweight 15 configured to move vertically upwardly and downwardly within the hoistway 12. The counterweight 15 moves in a direction generally opposite the movement of the elevator car 14 as is known in conventional elevator systems. Movement of the counterweight 15 is guided by counterweight guide rails (not shown) mounted within the hoistway 12. In the illustrated, non-limiting embodiment, at least one load bearing member 30, for example, a belt, coupled to both the elevator car 14 and the counterweight 15 cooperates with a traction sheave 18 mounted to a drive machine 20. To cooperate with the traction sheave 18, at least one load bearing member 30 bends in a first direction about the traction sheave 18. Although the elevator system 10 illustrated and described herein has a 1:1 roping configuration, elevator systems 10 having other roping configurations and hoistway layouts are within the scope of the present disclosure.

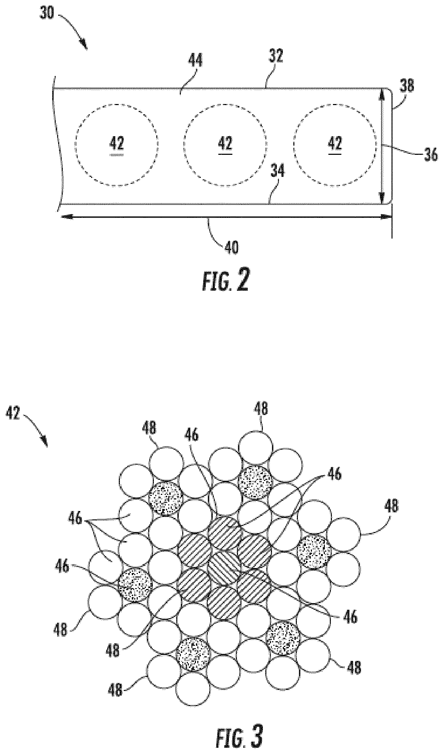

Referring now to FIG. 2, a partial cross-sectional view of an exemplary load bearing member or belt 30 is illustrated. The belt 30 includes a traction surface 32 interactive with the traction sheave 18, and a back surface 34 opposite the traction surface 32 and defining a belt thickness 36 therebetween. The belt 30 further includes two end surfaces 38 (one shown in the partial cross-section of FIG. 2) extending between the traction surface 32 and the back surface 34 and defining a belt width 40 therebetween. In some embodiments, the belt 30 has an aspect ratio of belt width 40 to belt thickness 36 that is greater than one.

The belt 30 includes plurality of tension members 42 extending along the belt 30 length and arranged across the belt width 40. In some embodiments, the tension members 42 are equally spaced across the belt width 40. The tension members 42 are at least partially enclosed in a jacket material 44 to restrain movement of the tension members 42 in the belt 30 and to protect the tension members 42. The jacket material 44 defines the traction surface 32 configured to contact a corresponding surface of the traction sheave 18. Exemplary materials for the jacket material 44 include, without limitation, the elastomers of thermoplastic and thermosetting polyurethanes, polyamide, thermoplastic polyester elastomers, thermosetting elastomers, thermoplastic elastomers, fluorosilicone rubber, silicone rubber, fluoroelastomer, and other rubbers, for example. Other materials may be used to form the jacket material 44 if they are adequate to meet the required functions of the belt 30. For example, a primary function of the jacket material 44 is to provide a sufficient coefficient of friction between the belt 30 and the traction sheave 18 to produce a desired amount of traction therebetween. The jacket material 44 should also transmit the traction loads to the tension members 42. In addition, the jacket material 44 should be wear resistant and protect the tension members 42 from impact damage, exposure to environmental factors, such as chemicals, for example.

In some embodiments, as shown in FIGs. 2 and 3, each tension member 42 is formed from a plurality of metallic, for example steel, wires 46, arranged into a plurality of strands 48, which are in turn arranged into a cord, or tension member 42. In other embodiments, the tension members 42 may be formed from other materials and may have other configurations. For example, in some embodiments, the tension member 42 may be formed from a plurality of fibers arranged in a rigid matrix composite. While in the embodiment shown there are six tension members 42 in the belt 30, the number of tension members 42 is merely exemplary. In other embodiments, for example, one, two, three, four, five, seven or more tension members 42 may be utilized. It is to be appreciated that arrangement of wires 46 shown in FIG. 3 is merely exemplary, and that other arrangements of wires 46 to form tension members 42 are contemplated within the scope of the present disclosure.

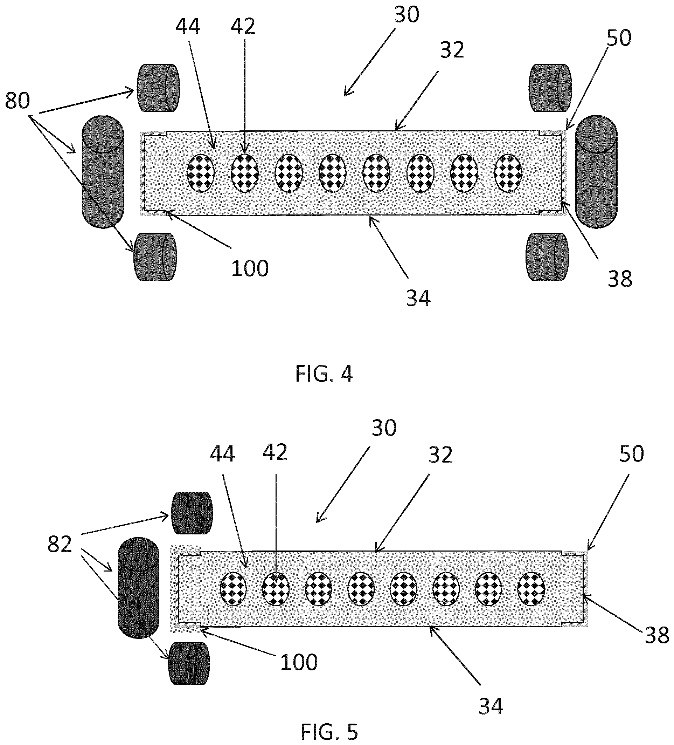

Referring now to FIG. 4, fire safety performance of the belt 30 is improved with a metalized polymer coating layer 50 over the jacket material 44 at the end surfaces 38, and in some embodiments wrapping partially around the belt 30 to extend onto the traction surface 32 and/or the back surface 34. In one embodiment, the metalized polymer coating layer 50 may be formed from a material that includes, without limitation, thermoplastic polyurethane, nitrile rubber, polybutadiene rubber, styrene-butadiene rubber, ethylene propylene rubber, ethylene propylene diene rubber, fluorosilicone rubber, silicone rubber, fluoroelastomer, polyethylene terephthalate, polyester, polyolefin, chloroprene, polyvinyl chloride, or other polymers, or thermoplastic elastomers, or thermoset elastomers, or a ductile metal, or the like. In an embodiment, one or more halogenated variations of one or more of the materials listed above at least partially forms part of the coating layer 50. The polymer coating layer 50 may be metalized via vapor deposition or electroless deposition or cold spray deposition or any other suitable method. In one embodiment, the polymer coating layer 50 is metalized with a metal such as aluminum, copper, gold, silver, tin, zinc, or any other ductile metal. In an embodiment, the metalized polymer coating layer 50 includes multiple layers of the same metal and/or multiple layers of different metals. In one non-limiting example, the metalized polymer coating layer includes a metal layer of a metal that resists corrosion and another metal layer serving a different purpose, such as a zinc-plated steel foil to name one non-limiting example. The thickness of each metal layer of the metalized polymer coating layer 50 is between 1 micrometer and 1000 micrometers in an embodiment, between 5 micrometers and 500 micrometers in another embodiment, and between 10 micrometers and 100 micrometers in another embodiment. The metalized polymer coating layer 50 may be particularly effective in preventing flame propagation around the belt 30 from the traction surface 32 to the back surface 34 or vice versa, via the end surfaces 38.

In some embodiments, the metalized polymer coating layer 50 may extend to cover up to about 40% of the width of the traction surface 32 and/or the back surface 34. In other embodiments, the metalized polymer coating layer 50 may extend to cover between 10% and 20% of the width of the traction surface 32 and/or the back surface 34. In one embodiment, the metalized polymer coating layer 50 may wrap around belt 30 to extend 0.1"-0.4" (2.5- 10.2 millimeters) onto the traction surface 32 and/or the back surface 34.

The traction surface 32 and/or the back surface 34 may be shaped prior to application of the metalized polymer coating layer 50 to form step bands 100 over which the metalized polymer coating layer 50 is applied. A depth and width of the step band 100 may be set to match the width and thickness of the metalized polymer coating layer 50 to be applied thereat.

In the embodiment shown in FIG. 4, which is not according to the invention, the metalized polymer coating layer 50 may be melt adhered to the jacket material 44 with in-line hot rollers 80. In one embodiment, the metalized polymer coating layer 50 may be applied through lamination. In one embodiment, the metalized polymer coating layer 50 may include a polymer carrier with a high adhesiveness to improve adhesion to the jacket material 44. In the embodiment shown in FIG. 5, which is not according to the invention, the metalized polymer coating layer 50 may be fed through an extrusion die along with the wires 46. In such an embodiment, the metalized polymer coating layer 50 may be cut or ground down with abrasion rollers 82 after cooling to remove excess material from the belt 30.

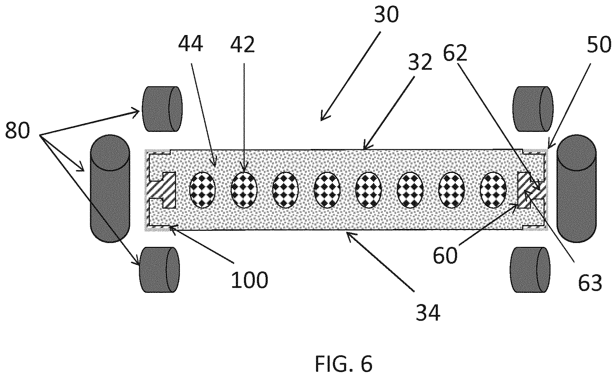

In the embodiment of the invention as shown in FIG. 6, the belt 30 includes a groove 60 formed in the end surfaces 38 of the jacket material 44. In an embodiment wherein the metalized polymer coating layer 50 is adhered to the jacket material 44, the metalized polymer coating layer 50 may be formed with a tongue 62 having tabs 63 that is inserted into the groove 60 during adhesion of the metalized polymer coating layer 50. In an embodiment wherein the metalized polymer coating layer 50 is extruded onto the jacket material 44, the tongue 62 of the metalized polymer coating layer 50 may be injected or melted into the groove 60. The tongue 62 and the groove 60 are constructed and arranged to interlock the metalized polymer coating material 50 to the jacket material 44.

## Claims

1. A belt (30) for an elevator system (10) comprising:
a plurality of tension members (42) arranged along a belt width (40);
a jacket material (44) at least partially encapsulating the plurality of tension members (42), the jacket material (44) comprising a traction surface (32) and a back surface (34) opposite the traction surface (32) together defining a belt thickness (36) therebetween, the jacket material (44) further comprising two end surfaces (38) extending between the traction surface (32) and the back surface (34) and defining the belt width (40) therebetween; and
a metalized polymer coating layer (50) disposed over at least one of the two end surfaces (38),
**characterised in that**
the jacket material (44) comprises a groove (60); and
the metalized polymer coating layer (50) comprises a tongue (62) interlocked within the groove (60).

2. The belt (30) of claim 1, wherein the metalized polymer coating layer (50) is further disposed over at least a portion of at least one of the traction surface (32) or the back surface (34).

3. The belt (30) of claim 1 or claim 2, wherein the metalized polymer coating layer (50) comprises at least one of polyurethane, nitrile rubber, polybutadiene rubber, styrene-butadiene rubber, ethylene propylene rubber, ethylene propylene diene rubber, fluorosilicone rubber, silicone rubber, fluoroelastomer, polyethylene terephthalate, polyester, polyolefin, chloroprene, polyvinyl chloride, or other polymer, or thermoplastic elastomer, or thermosetting elastomer or a ductile metal.

4. The belt (30) of any preceding claim, wherein the metalized polymer coating layer (50) comprises a ductile metal.

5. The belt (30) of any preceding claim, wherein the metalized polymer coating layer (50) is applied to the jacket material (44) through melt adhesion.

6. The belt (30) of any preceding claim, wherein the metalized polymer coating layer (50) is applied to the jacket material (44) through extrusion.

7. An elevator system (10) comprising:
an elevator car (14);
a counterweight (15); and
a belt (30) coupling the elevator car (14) to the counterweight (15), wherein the belt (30) is as defined in any one of the preceding claims.

8. A method of forming a belt (30) for an elevator system (10), the method comprising:
extending a plurality of tension members (42) along a belt width (40);
at least partially encapsulating the plurality of tension members (42) with a jacket material (44) having a traction surface (32) and a back surface (34) opposite the traction surface (32) together defining a belt thickness (36) therebetween, the jacket material (44) also having two end surfaces (38) extending between the traction surface (32) and the back surface (34) and defining the belt width (40) therebetween; and
disposing a metalized polymer coating layer (50) over at least one of the two end surfaces (38),
**characterised in that** the method further comprises
forming a groove (60) in the jacket material (44);
forming a tongue (62) in the metalized polymer coating layer (50); and
interlocking the tongue (62) within the groove (60).

9. The method of claim 8 further comprising disposing the metalized polymer coating layer (50) over at least a portion of at least one of the traction surface (32) or the back surface (34).

10. The method of claim 8 or 9 further comprising forming the metalized polymer coating layer (50) from at least one of polyurethane, nitrile rubber, polybutadiene rubber, styrene-butadiene rubber, ethylene propylene rubber, ethylene propylene diene rubber, fluorosilicone rubber, silicone rubber, fluoroelastomer, polyethylene terephthalate, polyester, polyolefin, chloroprene, polyvinyl chloride, or other polymer, or thermoplastic elastomer, or thermosetting elastomer, or a ductile metal.

11. The method of any one of claims 8-10 further comprising applying the metalized polymer coating layer (50) to the jacket material (44) through melt adhesion.

12. The method of any one of claims 8-11 further comprising applying the metalized polymer coating layer (50) to the jacket material (44) through extrusion.

## Patentansprüche

1. Riemen (30) für ein Aufzugssystem (10), umfassend:
eine Vielzahl von Zugelementen (42), die entlang einer Riemenbreite (40) angeordnet ist;
ein Mantelmaterial (44), das die Vielzahl von Zugelementen (42) zumindest teilweise einkapselt, wobei das Mantelmaterial (44) eine Traktionsfläche (32) und eine Rückfläche (34) gegenüber der Traktionsfläche (32) umfasst, die zusammen dazwischen eine Riemendicke (36) definieren, wobei das Mantelmaterial (44) ferner zwei Endflächen (38) umfasst, die sich zwischen der Traktionsfläche (32) und der Rückfläche (34) erstrecken und dazwischen die Riemenbreite (40) definieren; und
eine metallisierte Polymerbeschichtungsschicht (50), die über zumindest einer der zwei Endflächen (38) angeordnet ist,
**dadurch gekennzeichnet, dass**
das Mantelmaterial (44) eine Nut (60) umfasst; und
die metallisierte Polymerbeschichtungsschicht (50) eine Zunge (62) umfasst, die innerhalb der Nut (60) arretiert ist.

2. Riemen (30) nach Anspruch 1, wobei die metallisierte Polymerbeschichtungsschicht (50) ferner über zumindest einem Abschnitt von zumindest einer von der Traktionsfläche (32) oder der Rückfläche (34) angeordnet ist.

3. Riemen (30) nach Anspruch 1 oder Anspruch 2, wobei die metallisierte Polymerbeschichtungsschicht (50) zumindest eines von Polyurethan, Nitrilkautschuk, Polybutadienkautschuk, Styrolbutadienkautschuk, Ethylenpropylenkautschuk, Ethylenpropylendienkautschuk, Fluorsilikonkautschuk, Silikonkautschuk, Fluorelastomer, Polyethylenterephthalat, Polyester, Polyolefin, Chloropren, Polyvinylchlorid oder anderem Polymer oder thermoplastischem Elastomer oder duroplastischem Elastomer oder einem duktilen Metall umfasst.

4. Riemen (30) nach einem vorhergehenden Anspruch, wobei die metallisierte Polymerbeschichtungsschicht (50) ein duktiles Metall umfasst.

5. Riemen (30) nach einem vorhergehenden Anspruch, wobei die metallisierte Polymerbeschichtungsschicht (50) durch Schmelzhaftung auf das Mantelmaterial (44) aufgetragen wird.

6. Riemen (30) nach einem vorhergehenden Anspruch, wobei die metallisierte Polymerbeschichtungsschicht (50) durch Extrusion auf das Mantelmaterial (44) aufgetragen wird.

7. Aufzugssystem (10), umfassend:
eine Aufzugskabine (14);
ein Gegengewicht (15); und
einen Riemen (30), der die Aufzugskabine (14) an das Gegengewicht (15) koppelt, wobei der Riemen (30) wie in einem der vorhergehenden Ansprüche definiert ist.

8. Verfahren zum Bilden eines Riemens (30) für ein Aufzugssystem (10), wobei das Verfahren Folgendes umfasst:
Erstrecken einer Vielzahl von Zugelementen (42) entlang einer Riemenbreite (40);
zumindest teilweises Einkapseln der Vielzahl von Zugelementen (42) mit einem Mantelmaterial (44), das eine Traktionsfläche (32) und eine Rückfläche (34) gegenüber der Traktionsfläche (32) aufweist, die zusammen dazwischen eine Riemendicke (36) definieren, wobei das Mantelmaterial (44) auch zwei Endflächen (38) aufweist, die sich zwischen der Traktionsfläche (32) und der Rückfläche (34) erstrecken und dazwischen die Riemenbreite (40) definieren; und
Anordnen einer metallisierten Polymerbeschichtungsschicht (50) über zumindest einer der zwei Endflächen (38),
**dadurch gekennzeichnet, dass** das Verfahren ferner Folgendes umfasst
Bilden einer Nut (60) in dem Mantelmaterial (44);
Bilden einer Zunge (62) in der metallisierten Polymerbeschichtungsschicht (50); und
Arretieren der Zunge (62) innerhalb der Nut (60).

9. Verfahren nach Anspruch 8, ferner umfassend das Anordnen der metallisierten Polymerbeschichtungsschicht (50) über zumindest einem Abschnitt von zumindest einer von der Traktionsfläche (32) oder der Rückfläche (34).

10. Verfahren nach Anspruch 8 oder 9, ferner umfassend das Bilden der metallisierten Polymerbeschichtungsschicht (50) aus zumindest einem von Polyurethan, Nitrilkautschuk, Polybutadienkautschuk, Styrolbutadienkautschuk, Ethylenpropylenkautschuk, Ethylenpropylendienkautschuk, Fluorsilikonkautschuk, Silikonkautschuk, Fluorelastomer, Polyethylenterephthalat, Polyester, Polyolefin, Chloropren, Polyvinylchlorid oder anderem Polymer oder thermoplastischem Elastomer oder duroplastischem Elastomer oder einem duktilen Metall.

11. Verfahren nach einem der Ansprüche 8-10, ferner umfassend das Auftragen der metallisierten Polymerbeschichtungsschicht (50) auf das Mantelmaterial (44) durch Schmelzhaftung.

12. Verfahren nach einem der Ansprüche 8-11, ferner umfassend das Auftragen der metallisierten Polymerbeschichtungsschicht (50) auf das Mantelmaterial (44) durch Extrusion.

## Revendications

1. Courroie (30) d'un système d'ascenseur (10) comprenant :
une pluralité d'éléments de tension (42) agencés sur la largeur de la courroie (40) ;
un matériau de gaine (44) enveloppant au moins partiellement la pluralité d'éléments de tension (42), le matériau de gaine (44) comprenant une surface de traction (32) et une surface arrière (34) opposée à la surface de traction (32) délimitant ensemble une épaisseur de courroie (36) entre celles-ci, le matériau de gaine (44) comprenant en outre deux surfaces d'extrémité (38) s'étendant entre la surface de traction (32) et la surface arrière (34) et délimitant la largeur de courroie (40) entre celles-ci ; et
une couche de revêtement polymère métallisé (50) disposée sur au moins une des deux surfaces d'extrémité (38),
**caractérisée en ce que**
le matériau de gaine (44) comprend une rainure (60) ; et
la couche de revêtement polymère métallisé (50) comprend une langue (62) emboîtée avec la rainure (60).

2. Courroie (30) selon la revendication 1, dans laquelle la couche de revêtement polymère métallisé (50) est en outre disposée sur au moins une partie d'au moins un élément parmi la surface de traction (32) ou la surface arrière (34).

3. Courroie (30) selon la revendication 1 ou la revendication 2, dans laquelle la couche de revêtement polymère métallisé (50) comprend au moins un élément parmi le polyuréthane, le caoutchouc nitrile, le caoutchouc polybutadiène, le caoutchouc styrène-butadiène, le caoutchouc éthylène-propylène, le caoutchouc diénique éthylène-propylène, le caoutchouc fluorosilicone, le caoutchouc silicone, le fluoroélastomère, le téréphtalate de polyéthylène, le polyester, la polyoléfine, le chloroprène, le polychlorure de vinyle, ou un autre polymère, ou un élastomère thermoplastique, ou un élastomère thermodurcissable ou un métal ductile.

4. Courroie (30) selon une quelconque revendication précédente, dans laquelle la couche de revêtement polymère métallisé (50) comprend un métal ductile.

5. Courroie (30) selon une quelconque revendication précédente, dans laquelle la couche de revêtement polymère métallisé (50) est appliquée au matériau de gaine (44) à travers une adhérence par fusion.

6. Courroie (30) selon une quelconque revendication précédente, dans laquelle la couche de revêtement polymère métallisé (50) est appliquée au matériau de gaine (44) à travers une extrusion.

7. Système d'ascenseur (10) comprenant :
une cabine d'ascenseur (14) ;
un contrepoids (15) ; et
une courroie (30) couplant la cabine d'ascenseur (14) au contrepoids (15), dans lequel la courroie (30) est telle que définie dans l'une quelconque des revendications précédentes.

8. Procédé de fabrication d'une courroie (30) d'un système d'ascenseur (10), le procédé comprenant :
l'extension d'une pluralité d'éléments de tension (42) sur la largeur de la courroie (40) ;
l'enveloppement au moins partiel de la pluralité d'éléments de tension (42) avec un matériau de gaine (44) comportant une surface de traction (32) et une surface arrière (34) opposée à la surface de traction (32) délimitant ensemble une épaisseur de courroie (36) entre celles-ci, le matériau de gaine (44) comportant également deux surfaces d'extrémité (38) s'étendant entre la surface de traction (32) et la surface arrière (34) et délimitant la largeur de courroie (40) entre celles-ci ; et
la disposition d'une couche de revêtement polymère métallisé (50) sur au moins une des deux surfaces d'extrémité (38),
**caractérisé en ce que** le procédé comprend en outre
la formation d'une rainure (60) dans le matériau de gaine (44) ;
la formation d'une langue (62) dans la couche de revêtement polymère métallisé (50) ; et
l'emboîtement de la langue (62) à l'intérieur de la rainure (60).

9. Procédé selon la revendication 8, comprenant en outre la disposition de la couche de revêtement polymère métallisé (50) sur au moins une partie d'au moins un élément parmi la surface de traction (32) ou la surface arrière (34).

10. Procédé selon la revendication 8 ou 9, comprenant en outre la formation de la couche de revêtement polymère métallisé (50) à partir d'au moins un élément parmi le polyuréthane, le caoutchouc nitrile, le caoutchouc polybutadiène, le caoutchouc styrène-butadiène, le caoutchouc éthylène-propylène, le caoutchouc diénique éthylène-propylène, le caoutchouc fluorosilicone, le caoutchouc silicone, le fluoroélastomère, le téréphtalate de polyéthylène, le polyester, la polyoléfine, le chloroprène, le polychlorure de vinyle, ou un autre polymère, ou un élastomère thermoplastique, ou un élastomère thermodurcissable ou un métal ductile.

11. Procédé selon l'une quelconque des revendications 8 à 10, comprenant en outre l'application de la couche de revêtement polymère métallisé (50) au matériau de gaine (44) à travers une adhérence par fusion.

12. Procédé selon l'une quelconque des revendications 8 à 11, comprenant en outre l'application de la couche de revêtement polymère métallisé (50) au matériau de gaine (44) à travers une extrusion.
